# EUROPEAN PATENT SPECIFICATION

(11) **EP 1 161 473 B1**
(45) Date of publication and mention of the grant of the patent: **12.03.2003**
(21) Application number: 00910729.3
(22) Date of filing: 28.02.2000
(51) Int. Cl.: C08G 18/10, C08G 18/48

(54) **PROCESS FOR MAKING MICROCELLULAR POLYURETHANE ELASTOMERS WITH IMPROVED PROCESSABILITY**
VERFAHREN ZUR HERSTELLUNG VON MIKROZELLULÄREN POLYURETHAN-ELASTOMEREN MIT VERBESSERTEN VERARBEITUNGSEIGENSCHAFTEN
PROCEDE DE FABRICATION D'ELASTOMERES DE POLYURETHANNE MICROCELLULAIRES A APTITUDE AU TRAITEMENT AMELIOREE

(30) Priority: 26.02.1999 US 258495
(43) Date of publication of application: 12.12.2001
(73) Proprietor: BAYER ANTWERPEN N.V., 2040 Antwerpen (BE)
(72) Inventor: LI, Xiaohu, Burlington, MA 01803 (US); LAM, Jordan, Kowloon, Hong Kong (CN); DAI, Giac, Dzung, Van Buren, AK 72956 (US)
(74) Representative: Perchenek, Nils, Dr.
(86) International application number: EP0001673
(87) International publication number: WO00050483

(56) References cited:
- US-A- 5 470 935
- US-A- 5 719 252
- CHEMICAL ABSTRACTS, vol. 111, no. 6, 7 August 1989 (1989-08-07) Columbus, Ohio, US; abstract no. 40287r, DUFFY ET AL: "Effect of structure on the dynamic mechanical properties of polyurethanes" XP000187989 & POLYM. MATER. SCI. ENG. , vol. 60, 1989, pages 817-821, UK

## Description

### FIELD OF THE INVENTION

The invention relates to a way to improve processability in the preparation of microcellular elastomers. In particular, the invention improves the processing characteristics and physical properties of microcellular elastomers that contain a pigment.

### BACKGROUND OF THE INVENTION

Microcellular polyurethane elastomers are well known, as is illustrated, for example, by U.S. Pat. Nos. 5,728,745 and 5,250,582. These references and others teach the value of using polyether polyols having very low unsaturation levels to make the elastomers. In making shoe soles, these microcellular products are valuable because of their reduced shrinkage compared with elastomers made with conventional polyols that have higher unsaturation levels (see column 22 of U.S. Pat. No. 5,728,745).

A typical microcellular polyurethane elastomer formulation reacts a polyol or mixture of polyols with water, an amine blowing catalyst, an organometallic urethane catalyst, one or more chain extenders, and a surfactant with an organic polyisocyanate (e.g., TDI, MDI, or the like). Various processes are known for combining the reactants. In the common "one-shot" approach, the "B side" components (polyols, surfactants, catalysts, chain extenders, and water) are pre-mixed before combining and reacting them with the polyisocyanate ("A side"). Another approach is called the "prepolymer method." In this method, a prepolymer is prepared, usually by reacting the polyisocyanate with a portion of the polyols, chain extenders, or both to give an NCO-terminated intermediate. The NCO-terminated prepolymer is then reacted with a resin component or "B side" (a mixture of water, catalysts, surfactant, and the remaining amounts of polyol and/or chain extender) to produce the microcellular elastomer.

A pigment is often included in the formulation. Typical pigments are carbon black, titanium dioxide, iron oxides, or the like. While pigments are often a necessary part of the formulation, they can adversely affect both elastomer processability and physical/mechanical properties. We found that black pigments (e.g., carbon black) can interfere with processability of an otherwise acceptable microcellular elastomer formulation. Moreover, when products can be made, they often lack the required physical properties for high-performance applications.

A possible solution is to use a mixture of chain extenders. While 1,4-butanediol, ethylene glycol, and diethylene glycol are commonly used as chain extenders, only one chain extender is normally used. We found that various mixtures of 1,4-butanediol, ethylene glycol, and diethylene glycol were only partially satisfactory in overcoming the processing problems created by the presence of a pigment, particularly carbon black, in the prepolymer approach to making microcellular elastomers (see Table 1 below). Moreover, the overall physical properties of elastomers made with chain extender mixtures also dropped dramatically compared with the properties of elastomers made using 1,4-butenediol or ethylene glycol alone (see Table 2 below).

In sum, a better way to make microcellular polyurethane elastomers is needed. Preferably, microcellular elastomers containing pigments, especially black pigments, could be made using the prepolymer method while avoiding the processing difficulties introduced by the pigment. A preferred process would be easy to practice with conventional equipment and inexpensive, readily available starting materials. A valuable process would take advantage of the benefits of low-unsaturation polyols. Ideally, the resulting pigmented elastomers would maintain an excellent overall level of physical and mechanical properties, particularly good tensile, elongation, and tear properties, as well as high resilience and low compression sets.

### SUMMARY OF THE INVENTION

The invention is an improved prepolymer process for making microcellular polyurethane elastomers that contain a pigment. The process comprises making a microcellular elastomer by reacting a resin component ("B side") with an isocyanate-terminated prepolymer ("A side") in the presence of the pigment to produce a microcellular polyurethane elastomer. The resin component comprises a first polyol, a first chain extender, and an additive amount of a second chain extender selected from 1,3-propanediol and branched C₃-C₅ diols. The key component is the second chain extender, which is used in an amount effective to allow successful elastomer processing throughout at least a 5°C range of molding temperatures.

We surprisingly found that using 1,3-propanediol or a branched C₃-C₅ diol in addition to the usual ethylene glycol or 1,4-butanediol chain extender solves the problems of poor processability and poor physical properties that occur when a pigment is used in a prepolymer process to make microcellular polyurethane elastomers. The elastomers exhibit an excellent overall balance of physical and mechanical properties, including good tensile, elongation, and tear properties, high resilience, and low compression sets. The process is ideal for making elastomers useful as midsoles or shoe soles because it enables their fabrication over a broad range of molding temperatures.

### DETAILED DESCRIPTION OF THE INVENTION

In the process of the invention, the resin component ("B side") comprises a first polyol, a first chain extender, and an additive amount of a second chain extender selected from 1,3-propanediol and branched C₃-C₅ diols.

Polyols useful in the process of the invention are prepared by ring-opening polymerization of cyclic ethers, and include epoxide polymers, oxetane polymers, tetrahydrofuran polymers, and the like. Preferred are polyether polyols made by polymerizing epoxides, especially propylene oxide and/or ethylene oxide. Particularly preferred are propylene oxide-based polyols that are capped or tipped with oxyethylene groups. The polyols can be made by any desired method, including conventional base catalysis.

Preferred first polyols have a high content of primary hydroxyl end groups. Such polyols are normally made by tipping or capping the ends of an polyoxypropylene polyol with oxyethylene units. By "high-primary," we mean polyols having at least 50% primary hydroxyl groups. More preferably, the polyols have at least 65% primary hydroxyl groups; most preferred are polyols having at least 75% primary hydroxyl groups.

Preferred first polyols also have low unsaturation. By "low-unsaturation," we mean less than 0.02 meq/g of unsaturation as measured by standard methods, such as ASTM D-2849-69, "Testing of Urethane Foam Polyol Raw Materials." More preferred polyols have unsaturations less than 0.01 meq/g; most preferred are polyols having unsaturations less than 0.007 meq/g. Polyols with very low unsaturation levels are conveniently made via double metal cyanide catalysis as described, for example, in U.S. Pat. Nos. 5,470,813 and 5,482,908.

Suitable first polyols have a nominal hydroxyl functionality within the range of 2 to 6. Preferably, the first polyol has an average hydroxyl functionality less than 3. A more preferred range is from 1.8 to 3.0. In addition, the polyol preferably has a number average molecular weight within the range of 500 to 50,000. A more preferred range is from 1000 to 6000; most preferred is the range from 2000 to 6000.

The first polyol preferably has an oxyethylene content of at least 5 wt.%, more preferably from 10 to 20 wt.%, which can be present internally, as a tip, or as an endcap. Preferably, most of the oxyethylene content is located toward the end of the polyol to provide for the desirable high content of primary hydroxyl groups.

The first polyol is typically the major component of the "B side." Generally, it comprises at least 40 wt.% of the resin component. A preferred range is from 45 to 90 wt.%, more preferably from 50 to 70 wt.% of the resin component

The resin component also includes a first chain extender. Useful first chain extenders have at least two active hydrogens, and Include low molecular weight diols, diamines, aminoalcohols, dithiols, or the like. Preferably, the chain extenders have number average molecular weights less than 400, more preferably less than 300. Diols are preferred first chain extenders, especially ones with an even number of carbons between the hydroxyl groups. Suitable chain extenders indude, for example, ethylene glycol, 1,4-butenediol, diethylene glycol, dipropylene glycol, trimethylene glycol, tripropylene glycol, cyclohexanedimethanol, 1,6-hexanedtol. ethylene diamine, ethanedithiol, and the like, and mixtures thereof. Particularly preferred are dipropylene glycol, ethylene glycol, and 1,4-butanediol. A very minor proportion of chain extender having 3 or more active hydrogens (e.g., glycerine) can be included if desired.

The first chain extender is a minor "B" side component. Typically, it comprises less than 30 wt.% of the resin component. A preferred range is from 1 to 20 wt.%, more preferably from 3 to 10 wt.% of the resin component.

A minor yet key piece of the resin component is the second chain extender, which is selected from 1,3-propanediol and branched C₃-C₅ diols and is used in an additive amount By "additive amount," we mean that the second chain extender is used in addition to the normal amount of first chain extender. Generally, the second chain extender is used in an amount effective to allow successful elastomer processing throughout at least a 5°C range of molding temperatures. Preferred second chain extenders are even more forgiving, allowing successful elastomer processing throughout at least a 10°C range of molding temperatures. The amount of second chain extender used is preferably up to 50 wt.% based on the total amount of chain extenders. More preferably, the amount used is within the range of 5 to 25 wt.%, most preferably from 6 to 20 wt.%, based on the total amount of chain extenders.

The second chain extender is 1,3-propanediol (a linear C₃ diol) or a branched C₃-C₅ diol. Suitable branched C₃-C₅ diols include, for example, propylene glycol, 2-methyl-1,3-propanediol, 1,3-butanediol, neopentyl glycol, 1,3-dimethyl-1,3-propanediol, 1,2-dimethylpropanediol, and the like, and mixtures thereof. 2-Methyl-1,3-propanediol is particularly preferred.

The resin component optionally includes additional polyols. Preferably, the resin component includes a polymer polyol. Suitable polymer polyols include the well-known variety prepared by in situ polymerization of vinyl monomers in a base polyol to give a stable dispersion of polymer particles in the base polyol, such as styrene-acrylonitrile (SAN) polymer polyols. Other suitable polymer polyols include PIPA and PHD polyols, which are-like the SAN polymer polyols-commercially available. These polymer polyols have polymer solids contents generally in the range of 5 to 50 wt%. When a polymer polyol is included, it is preferred to use an amount within the range of 5 to 45 wt.% based on the total amount of resin component.

An isocyanate-terminated prepolymer ("A side") reacts with the resin component ("B side") in the process of the invention. The prepolymer is the reaction product of a polyisocyanate and a second polyol.

The polyisocyanate is an aromatic, aliphatic, or cycloaliphatic isocyanate that contains at least two free NCO groups. Suitable polyisocyanates include diphenylmethane diisocyanates (MDIs), polymeric MDIs, MDI variants, toluene diisocyanates, hexamethylene diisocyanate, isophorone diisocyanate, and the like, and mixtures thereof. Preferred polyisocyanates are 4,4'-MDI, other MDI blends that contain a substantial proportion of the 4,4'-MDI isomer, and modified MDIs made by reacting MDI with itself of another component to introduce carbodiimide, allophanate, urea, urethane, biuret, or other linkages into the structure (MDI variants). Particularly preferred are 4,4'-MDI, carbodiimide-modified MDIs, and mixtures thereof. The amount of polyisocyanate used is preferably the amount needed to give an NCO-terminated prepolymer or quasiprepolymer having a free NCO content within the range of 15 to 30 wt.%, more preferably from 18 to 28 wt.%.

The prepolymer includes a second polyol, which may be the same as or different from the first ("B side") polyol. The second polyol preferably has the same general characteristics as the first, however, i.e., preferably low unsaturation (less than 0.02 meq/g) and preferably a high content (at least 50%) of primary hydroxyl groups. The second polyol Is a minor "A side" component, preferably comprising from 1 to less than 50 wt.% of the prepolymer component; a more preferred range is from 2 to 20 wt%. The prepolymer may include a minor proportion of one or both of the chain extender components.

The prepolymer is generally made by combining the second polyol and polyisocyanate and heating the mixture at a temperature and for a time effective to produce an isocyanate-terminated prepolymer. Heating continues until the prepolymer reaches the desired content of free NCO groups.

After the prepolymer has been made, it is combined with the resin component using conventional techniques to make the microcellular elastomer. The resin component is a well-blended mixture of the first polyol, the first chain extender, the second chain extender, the pigment, and other optional components such as blowing agents, surfactant, catalysts, and the like. The elastomers can be made by hand casting or machine. The "A side" and "B side" components are combined, rapidly mixed, and injected or poured into open or closed molds. The formulations described herein are well suited for use with commercial molding equipment (such as the "Green Machine") for making midsoles and shoe soles by closed molding techniques.

Preferably, the process of the invention is performed in the presence of a blowing agent Suitable blowing agents are those well known in the art of formulating microcellular polyurethane elastomers. They include "physical" blowing agents, such as low-boiling halocarbons (e.g., CFCs, HCFCs, methylene chloride) or hydrocarbons (e.g., butane, pentane), inert gases (e.g., nitrogen, argon, carbon dioxide), or the like, and "reactive" blowing agents, such as water and other active-hydrogen compounds that react with NCO groups to liberate gases. Mixtures of blowing agents can be used. Water is a particularly preferred blowing agent. The blowing agent is used in an amount needed to produce a microcellular elastomer having a density of less than 0.6 g/cm³. Preferably, the resulting elastomer has a density within the range of 0.02 to 0.5 g/cm³; most preferred is the range from 0.1 to 0.4 g/cm³.

The process optionally includes other conventional urethane foam components, such as surfactants, blowing catalysts, urethane catalysts, UV stabilizers, crosslinkers, antioxidants, other polyols, and/or other additives. These optional ingredients are preferably mixed thoroughly with the resin component before reacting it with the "A side" to make the elastomer.

A pigment is included in the process of the invention. Suitable pigments include, for example, carbon black, titanium dioxide, transition or main group metal oxides or hydroxides (e.g., iron oxides), or the like. While any desired pigment can be induded, the process is particularly valuable for use with black pigments such as carbon black. The pigment is preferably present in an amount within the range of 0.1 to 10 wt.%, more preferably from 0.5 to 5 wt.% based on the total amount of the formulation.

The process of the invention enables successful elastomer processing over a wide temperature range. At minimum, elastomers can be processed throughout at least a 5°C range, more preferably at least a 10°C range, of molding temperatures. While any suitable molding temperature can be used, molding is generally performed at a temperature within the range of 30°C to 100°C; a more preferred range is from 40°C to 60°C. As Table 3 below shows, the use of 1,3-propanediol or a branched C₃-C₅ diol as a second chain extender according to the process of the invention allows defect-free pigmented products to be made over a broad temperature range (see Examples 1-4). Without the second chain extender, however, the temperature window for successful processing becomes too narrow (Comparative Example 12). Interestingly, the pigment causes the processing problem. This is evident from Comparative Examples 11 and 13, which reveal good elastomer processing (with or without a second chain extender) in the absence of the pigment.

The process of the invention also offers physical property advantages. As Table 3 shows, low-density microcellular elastomers made by the process have an excellent balance of properties, including good Asker C hardness, resilience, tensile, tear, and compression set properties. This is particularly evident when Examples 1-4 are compared with Comparative Examples 1-10 (see Tables 1 and 2). As Table 1 shows, the usual chain extenders (1,4-butanediol, ethylene glycol, diethylene glycol, or mixtures of these) rarely give a product with high enough hardness (i.e., greater than 65 on the Asker C scale). Moreover, as Tables 2 and 3 show, the tensile strength, split tear strength, resilience, and compression set properties generally improve versus the comparative samples when an additive amount of a 1,3-propanediol or a branched C₃-C₅ diol chain extender is included in the formulation. In sum, the process of the invention makes it possible to formulate--with ease--pigmented, low-density elastomers with excellent physical properties.

### EXAMPLES 1-4

### Preparation of Microcellular Polyurethane Elastomers

The "Green Machine" is used to mold 10-mm microcellular elastomer plaques by reaction injection molding, at 40 g/s, mixtures of the prepolymer ("A side") and resin component ("B side") as detailed in the Formulation below. The resin component and prepolymer stream temperatures are about 35°C. Mold temperatures are in the 40-60°C range. The products are demolded in 6-7 minutes. The pigmented samples are molded at a density of 0.40 g/cm³, and the clear samples (no pigment) are molded at a density of 0.36 g/cm³. Physical properties appear in Table 3.

### COMPARATIVE EXAMPLES 1-10

The procedure of Examples 1-4 is followed, except that the chain extender consists of 1,4-butenediol, ethylene glycol, diethylene glycol, or mixtures of these, in the relative proportions specified in Table 1. In these examples, the processing window for making defect-free parts is practically nil; the parts have splits, voids, shrinkage problems, inadequate hardness, or a combination of these defects (see Table 1). Physical properties of these elastomers appear in Table 2.

### COMPARATIVE EXAMPLES 11-13

In Comparative Example 11, the standard Formulation is used, except that no second chain extender (1,3-propanediol or branched C₃-C₅ diol) is included, and no pigment is included. A satisfactory (though pigment-free) product is made.

In Comparative Example 12, the standard Formulation is used, except that no second chain extender is included. The sample cannot be processed successfully using mold temperatures in the usual 40°C to 60°C range. The products have poor skin quality and subsurface bubbles.

In Comparative Example 13, the standard Formulation is used, including a second chain extender, except that no pigment is included. A satisfactory (though pigment-free) product is made.

Table 3 summarizes the processing and physical properties of these elastomers.

The preceding examples are meant only as illustrations; the following claims define the scope of the invention.

| Formulation | |
|---|---|
| Resin component ("B" side) | pbw |
| Polyol A¹ | 50-60 |
| Polyol B² | 5-10 |
| Polyol C³ | 30-40 |
| Water | 0.3-0.8 |
| Ethylene glycol | 4-8 |
| Second chain extender | 0.5-2 |
| Silicone surfactant | 0.3 |
| Black pigment | 2 |
| Amine catalyst | 0.9-1.1 |
| Organotin catalyst | 0.01-0.04 |

| Prepotymer ("A" side; 24 wt.% NCO) | |
|---|---|
| 4,4'-MDI | 70-80 |
| Carbodiimide-modified MDI | 4-12 |
| Polyol A | 2-8 |
| NCO/OH index | 100 |

| | |
|---|---|
| ¹ Polyoxypropylene diol having Mn=4000, about 20 wt.% oxyethylene content (5% internal, 15% cap), and a primary OH group content of about 85%. | |
| ² Polyoxypropylene triol having Mn=6000, about 20 wt.% oxyethylene content (5% internal, 15% cap), and a primary OH group content of about 85%. | |
| ³ SAN-type polymer polyol, 43 wt.% solids content, hydroxyl number 20 mg KOH/g. | |

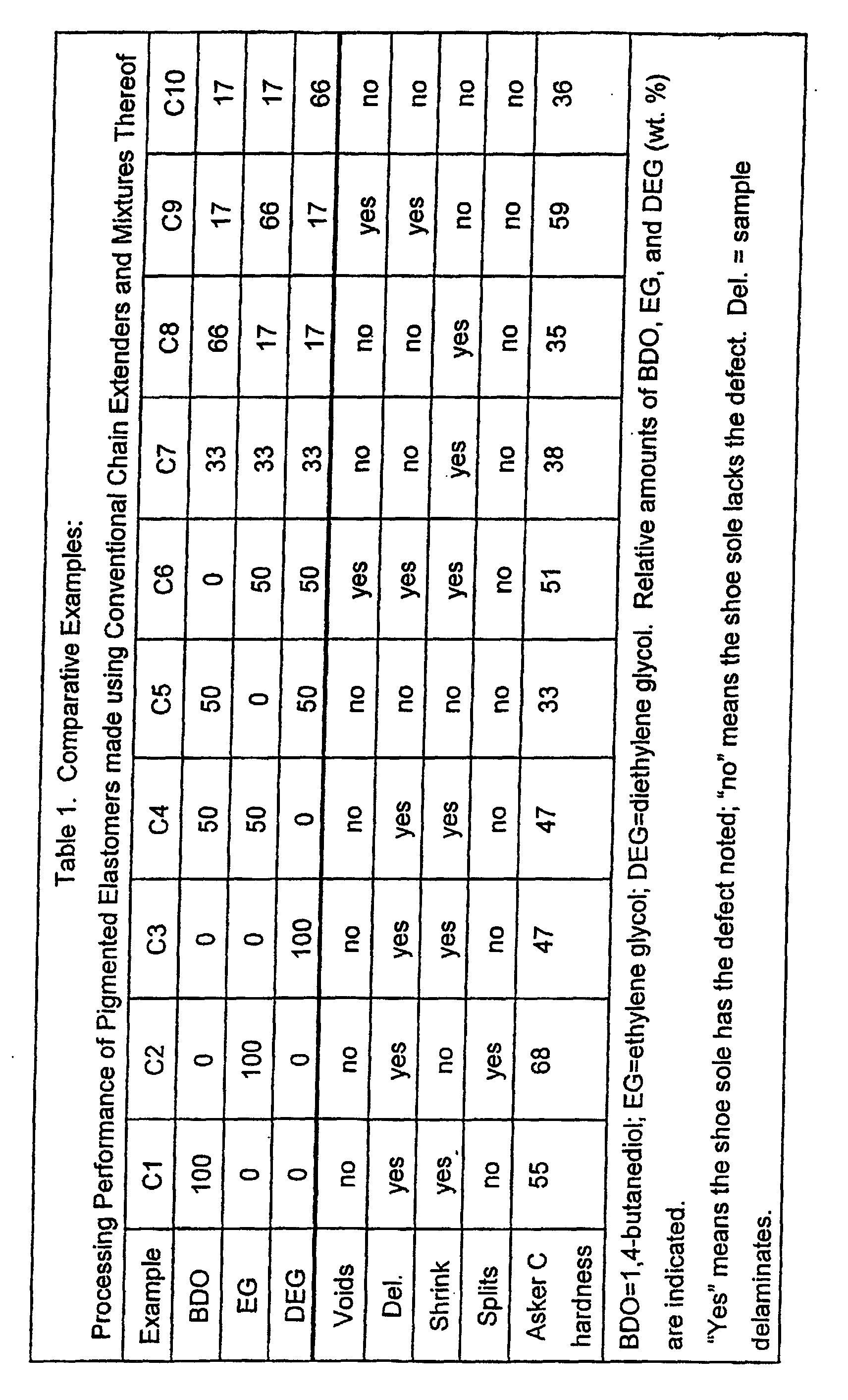

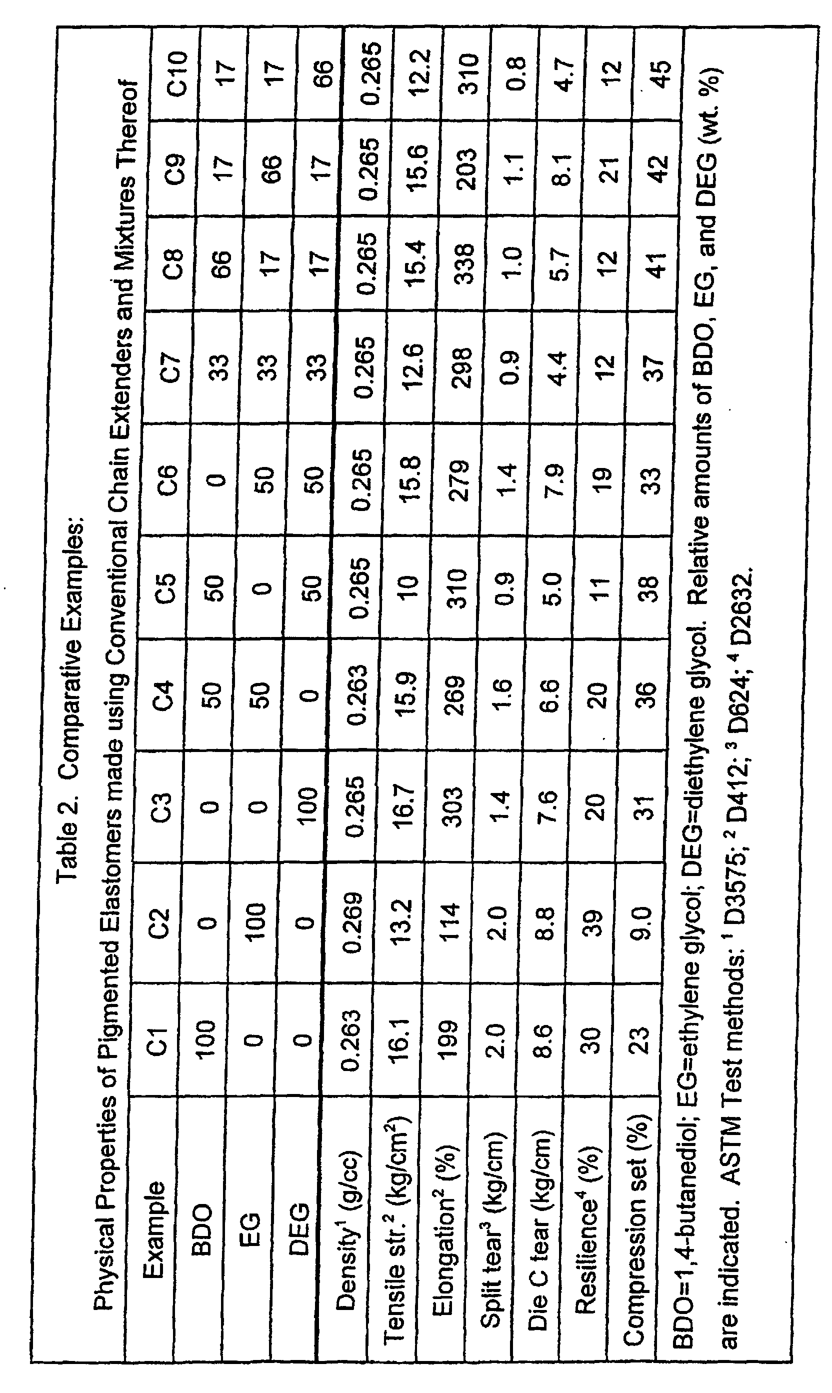

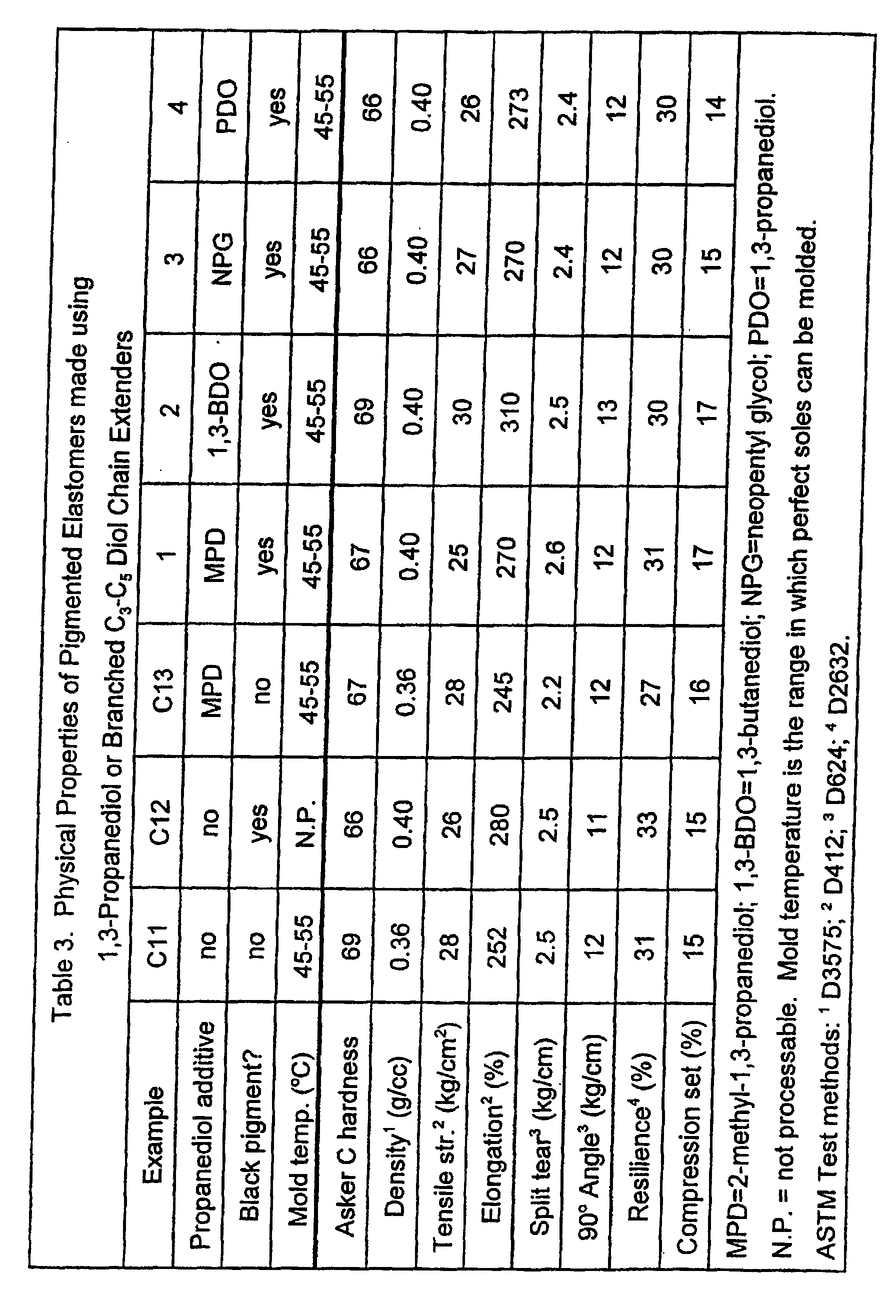

## Claims

1. A process for the production of a microcellular polyurethane elastomer having a density of less than 0.6 g/cm³, which comprises reacting a resin component ("B side") with an isocyanate-terminated prepolymer ("A side") in the presence of a pigment and optionally in the presence of a blowing agent, a surfactant, a blowing catalyst, and a urethane catalyst;
wherein the resin component comprises a first polyol, a first chain extender, and a second chain extender selected from the group consisting of 1,3-propanediol and branched C₃-C₅ diols;
wherein the prepolymer comprises the reaction product of a polyisocyanate and a second polyol, which may be the same as, or different from, the first polyol.

2. A process according to Claim 1 wherein at least one of the polyols is a low-unsaturation polyol.

3. A process according to Claim 1 or Claim 2 wherein at least one of the polyols is a high-primary, low-unsaturation polyol.

4. A process according to any preceding claim wherein the resin component includes a polymer polyol.

5. A process according to any preceding claim wherein the first polyol is a high-primary, low-unsaturation polyol, and the resin component includes a polymer polyol; and wherein the second polyol is a high-primary, low-unsaturation polyol, which may be the same as, or different from, the first polyol.

6. A process according to any preceding claim wherein the second chain extender is selected from the group consisting of 1,3-propanediol, 2-methyl-1,3-propanediol, neopentyl glycol, and 1,3-butanediol.

7. A process according to Claim 6 wherein the second chain extender is 2-methyl-1,3-propanediol.

8. A process according to any preceding claim wherein the second chain extender is used in an amount effective to allow successful elastomer processing throughout at least a 10°C range of molding temperatures, said range of molding temperatures being within the range of 40°C to 60°C.

9. A process according to any preceding claim wherein the second chain extender is used in an amount up to 50 wt.% based on the total amount of chain extenders.

10. A process according to Claim 9 wherein the second chain extender is used in an amount within the range of 5 to 25 wt.% based on the total amount of chain extenders.

11. A process according to any preceding claim wherein the polyisocyanate is a mixture which comprises a major proportion of 4,4'-MDI and a minor proportion of carbodiimide-modified MDI.

12. A process according to any preceding claim wherein the pigment comprises carbon black.

13. A process according to Claim 12 wherein the carbon black is present in an amount within the range of 0.5 to 5 wt.% based on the total amount of formulation.

14. A process according to any preceding claim wherein the elastomer has a density within the range of 0.02 to 0.5 g/cm³.

15. A microcellular polyurethane elastomer having a density of less than 0.6 g/cm³ produced by the process of any preceding claim.

16. A shoe sole or midsole made by the process of any preceding claim.

## Patentansprüche

1. Verfahren zur Herstellung eines mikroporösen Polyurethanelastomers mit einer Dichte von weniger als 0,6 g/cm³, umfassend das Umsetzen einer Harzkomponente ("B-Seite") mit einem Isocyanat-terminierten Prepolymer ("A-Seite") in Gegenwart eines Pigments und gegebenenfalls in Gegenwart eines Treibmittels, eines Tensids, eines Schäumungskatalysators und eines Urethan-Katalysators;
wobei die Harzkomponente ein erstes Polyol, einen ersten Kettenverlängerer sowie einen zweiten Kettenverlängerer, der aus der Gruppe ausgewählt ist, die aus 1,3-Propandiol und verzweigten C₃-C₅-Diolen besteht;
wobei das Prepolymer das Reaktionsprodukt eines Polyisocyanats und eines zweiten Polyols, das mit dem ersten Polyol identisch oder von diesem verschieden sein kann, umfasst.

2. Verfahren gemäß Anspruch 1, wobei wenigstens eines der Polyole ein Polyol mit geringer Unsättigung ist.

3. Verfahren gemäß Anspruch 1 oder Anspruch 2, wobei wenigstens eines der Polyole ein Polyol mit hohem Anteil an primären OH-Gruppen und geringer Unsättigung ist.

4. Verfahren gemäß einem der vorstehenden Ansprüche, wobei die Harzkomponente ein Polymerpolyol umfasst.

5. Verfahren gemäß einem der vorstehenden Ansprüche, wobei das erste Polyol ein Polyol mit hohem Anteil an primären OH-Gruppen und geringer Unsättigung ist und die Harzkomponente ein Polymerpolyol umfasst und
wobei das zweite Polyol ein Polyol mit hohem Anteil an primären OH-Gruppen und geringer Unsättigung ist, das mit dem ersten Polyol identisch oder von diesem verschieden sein kann.

6. Verfahren gemäß einem der vorstehenden Ansprüche, wobei der zweite Kettenverlängerer aus der Gruppe ausgewählt ist, die aus 1,3-Propandiol, 2-Methyl-1,3-propandiol, Neopentylglycol und 1,3-Butandiol besteht.

7. Verfahren gemäß Anspruch 6, wobei es sich bei dem zweiten Kettenverlängerer um 2-Methyl-1,3-propandiol handelt.

8. Verfahren gemäß einem der vorstehenden Ansprüche, wobei der zweite Kettenverlängerer in einer Menge verwendet wird, die eine erfolgreiche Elastomerverarbeitung innerhalb eines wenigstens 10°C breiten Bereichs von Formtemperaturen ermöglicht, wobei der Bereich der Formtemperaturen innerhalb des Bereichs von 40 °C bis 60 °C liegt.

9. Verfahren gemäß einem der vorstehenden Ansprüche, wobei der zweite Kettenverlängerer in einer Menge von bis zu 50 Gew.-% verwendet wird, bezogen auf die Gesamtmenge der Kettenverlängerer.

10. Verfahren gemäß Anspruch 9, wobei der zweite Kettenverlängerer in einer Menge innerhalb des Bereichs von 5 bis 25 Gew.-% verwendet wird, bezogen auf die Gesamtmenge der Kettenverlängerer.

11. Verfahren gemäß einem der vorstehenden Ansprüche, wobei das Polyisocyanat ein Gemisch ist, das einen größeren Anteil 4,4'-MDI und einen kleineren Anteil an Carbodiimid-modifiziertem MDI umfasst.

12. Verfahren gemäß einem der vorstehenden Ansprüche, wobei das Pigment Ruß umfasst.

13. Verfahren gemäß Anspruch 12, wobei der Ruß in einer Menge innerhalb des Bereichs von 0,5 bis 5 Gew.-%, bezogen auf die Gesamtmenge der Zubereitung, vorhanden ist.

14. Verfahren gemäß einem der vorstehenden Ansprüche, wobei das Elastomer eine Dichte innerhalb des Bereichs von 0,02 bis 0,5 g/cm³ hat.

15. Mikroporöses Polyurethanelastomer mit einer Dichte von weniger als 0,6 g/cm³, das nach dem Verfahren gemäß einem der vorstehenden Ansprüche hergestellt wurde.

16. Schuhsohle oder Zwischensohle, die nach dem Verfahren gemäß einem der vorstehenden Ansprüche hergestellt wurde.

## Revendications

1. Procédé pour la production d'un élastomère de polyuréthane microcellulaire ayant une masse volumique inférieure à 0,6 g/cm³, qui comprend la réaction d'un constituant résine ("côté B") avec un prépolymère à terminaison isocyanate ("côté A") en présence d'un pigment et éventuellement en présence d'un agent de gonflement, d'un tensioactif, d'un catalyseur de gonflement et d'un catalyseur d'uréthane;
dans lequel le constituant résine comprend un premier polyol, un premier agent d'allongement de la chaîne et un second agent d'allongement de la chaîne, choisi dans le groupe constitué par le 1,3-propanediol et les diols ramifiés en C₃-C₅;
dans lequel le prépolymère comprend le produit de la réaction entre un polyisocyanate et un second polyol, qui peut être identique au, ou différent du, premier polyol.

2. Procédé selon la revendication 1, dans lequel au moins un des polyols est un polyol à faible taux d'insaturation.

3. Procédé selon la revendication 1 ou la revendication 2, dans lequel au moins un des polyols est un polyol fortement primaire à faible taux d'insaturation.

4. Procédé selon l'une quelconque des revendications précédentes, dans lequel le constituant résine comprend un polyol polymère.

5. Procédé selon l'une quelconque des revendications précédentes, dans lequel le premier polyol est un polyol fortement primaire à faible taux d'insaturation et le constituant résine comprend un polyol polymère; et dans lequel le second polyol est un polyol fortement primaire à faible taux d'insaturation, qui peut être identique au, ou différent du, premier polyol.

6. Procédé selon l'une quelconque des revendications précédentes, dans lequel le second agent d'allongement de la chaîne est choisi dans le groupe constitué par le 1,3-propanediol, le 2-méthyl-1,3-propanediol, le néopentylglycol et le 1,3-butanediol.

7. Procédé selon la revendication 6, dans lequel le second agent d'allongement de la chaîne est le 2-méthyl-1,3-propanediol.

8. Procédé selon l'une quelconque des revendications précédentes, dans lequel le second agent d'allongement de la chaîne est utilisé en une quantité efficace pour permettre le traitement réussi de Pélastomère dans la totalité d'un intervalle de températures de moulage d'au moins 10°C, ledit intervalle de températures de moulage étant dans l'intervalle compris entre 40°C et 60°C.

9. Procédé selon l'une quelconque des revendications précédentes, dans lequel le second agent d'allongement de la chaîne est utilisé en une quantité allant jusqu'à 50% en masse, sur la base de la quantité totale des agents d'allongement de la chaîne.

10. Procédé selon la revendication 9, dans lequel le second agent d'allongement de la chaîne est utilisé en une quantité dans l'intervalle compris entre 5 et 25% en masse, sur la base de la quantité totale des agents d'allongement de la chaîne.

11. Procédé selon l'une quelconque des revendications précédentes, dans lequel le polyisocyanate est un mélange qui comprend une proportion majoritaire de 4,4'-MDI et une proportion minoritaire de MDI modifié par un carbodiimide.

12. Procédé selon l'une quelconque des revendications précédentes, dans lequel le pigment comprend du noir de carbone.

13. Procédé selon la revendication 12, dans lequel le noir de carbone est présent est une quantité dans l'intervalle compris entre 0,5 et 5% en masse, sur la base de la quantité totale de la formulation.

14. Procédé selon l'une quelconque des revendications précédentes, dans lequel l'élastomère présente une masse volumique dans l'intervalle compris entre 0,02 et 0,5 g/cm³.

15. Elastomère de polyuréthane microcellulaire présentant une masse volumique inférieure à 0,6 g/cm³, produit par le procédé selon l'une quelconque des revendications précédentes.

16. Semelle pour chaussure ou semelle intercalaire préparée par le procédé selon l'une quelconque des revendications précédentes.
